Europäisches Patentamt

European Patent Office

Office européen des brevets

Publication number: **0 318 079**

**A1**

# EUROPEAN PATENT APPLICATION

Application number: 88202483.9

Int. Cl.4 **B01D 27/08 , B01D 29/06**

Date of filing: 07.11.88

Priority: 23.11.87 NL 8702806

Date of publication of application:
**31.05.89 Bulletin 89/22**

Designated Contracting States:
**AT BE CH DE ES FR GB GR IT LI LU NL SE**

Applicant: **FAIREY ARLON B.V.**
**No. 8, Stieltjesweg**
**NL-6827 BV Arnhem(NL)**

Inventor: **De Gelder, Mark**
**No. 8, Diedenweg**
**NL-6717 KT Ede (Gld)(NL)**

Representative: **'t Jong, Bastiaan Jacobus et al**
**OCTROOIBUREAU ARNOLD & SIEDSMA**
**Sweelinckplein 1**
**NL-2517 GK 's-Gravenhage(NL)**

## Filter device and filter cartridge therefor.

Filter device comprising a filter housing with feed and discharge channels for the medium to be filtered and a disposable filter cartridge releasably connected to said filter housing by a coupling device, in which said filter cartridge comprises a filter element accommodated in a pressure resistant outer casing and is provided with coupling means co-operating with said coupling device. Said coupling device comprises a mounting with an interior, outwardly diverging conical wall and a sealing ring located in a groove in said wall, and tensioning means, and said coupling means comprise an outwardly converging conical end wall fitting into said conical mounting and a tensioning surface, in which said tensioning means can grip on said tensioning surface to hold said conical end wall in gripping contact in the mounting.

FIG. 1

Xerox Copy Centre

# FILTER DEVICE AND FILTER CARTRIDGE THEREFOR

The invention relates to a filter device comprising a filter housing with feed and discharge channels for the medium to be filtered and a disposable filter cartridge releasably connected to the filter housing by a coupling device, in which the filter cartridge comprises a filter element accommodated in a pressure resistant outer casing and is provided with coupling means co-operating with the coupling device. Such a filter device is generally known. In the usual manner the coupling device comprises a protruding tubular stump provided on the outside with a screw thread onto which the filter cartridge can be screwed with a screw thread arranged in a transverse end wall thereof. The medium to be filtered is fed for example through the tubular stump and discharged through openings lying on a greater diameter in the end wall, these openings connecting in close fitting manner by means of a sealing onto corresponding openings in the filter housing.

The advantage of a filter device of this type is that the filter cartridge can be simply replaced and that furthermore the device of which the filter device forms part cannot operate without a filter element being present, thus ensuring that the required filtering action is always performed.

The drawback of a filter device of this kind is that it is only suitable for filtering a medium under a limited pressure, since at higher pressures the pressure acting on the portion of the cartridge lying outside the tubular stump can result in deformation of the end wall and thereby to the occurrence of leakage. Use is therefore generally made for high pressures of separate filter elements mounted in a pressure resistant housing. The replacing of a filter element is as a result comparatively time-consuming and there is moreover the danger that the pressure resistant housing is mounted without a filter element being fitted and that the device is therefore operated without the necessary filtering action.

The object of the invention is to provide a filter device of the kind described in the preamble that is suitable for use in the filtering of medium under high pressure.

This is achieved in the filter device according to the invention in that the coupling device comprises a mounting having an interior, outwardly diverging conical wall and a sealing ring located in a groove in the wall, and tensioning means, that the coupling means comprise an outwardly converging conical end wall fitting into the conical mounting and a tensioning face, in which the tensioning means can grip on the tensioning face to hold the conical end wall in gripping contact in the mounting. It is herewith achieved that the sealing of the filter cartridge in the mounting is in fact strengthened when pressure increases. The high pressure acts on the inside on the conical end wall thus pressing it firmly into the conical mounting. The filter device can as a result operate at very high pressure without any resulting danger of leakage.

According to a preferred embodiment of the invention the groove has a cylindrical bottom wall and the sealing ring is an O-ring. Since in the position of use the groove is bounded on the inside by the conical end wall of the filter cartridge there results in combination with the cylindrical bottom wall a groove section which converges in axial outward direction. When the filter cartridge is fitted the O-ring is pressed upwards into the groove. As soon as the medium pressure comes above the O-ring the latter is pressed downwards into this converging groove, which results in a very good sealing against the conical end wall of the filter cartridge being obtained.

A preferred embodiment of the filter device appears from claim 3. As a result of this the entire outer wall of the filter cartridge subjected to the difference in pressure between the medium pressure and the atmospheric pressure consists of one whole, which is favourable for the reliable absorption of the high pressure.

A further development of the invention is characterized in claim 4. The groove coupling nut can on the one hand press the conical end wall firmly into the conical mounting and supports on the other the outer casing in a very suitable manner. Moreover, the manufacture of the outer casing of the cartridge is easy to perform in this way.

Further favourable embodiments are found in claims 5 and 6.

The invention likewise relates to and provides a filter cartridge for use in a filter device as described above. The filter cartridge according to the invention is characterized in that the coupling means thereof comprise an outwardly converging end wall and a tensioning surface.

Further favourable embodiments of the filter cartridge according to the invention will be found in claims 8-11

The invention will be further elucidated in the following description with reference to the embodiments shown in the figures.

Fig. 1 shows a longitudinal section of a filter device according to the invention.

Fig. 2 shows a detail as according to arrow II in Fig. 1.

Fig. 3 shows as an alternative a portion of Fig. 2 in an adapted embodiment.

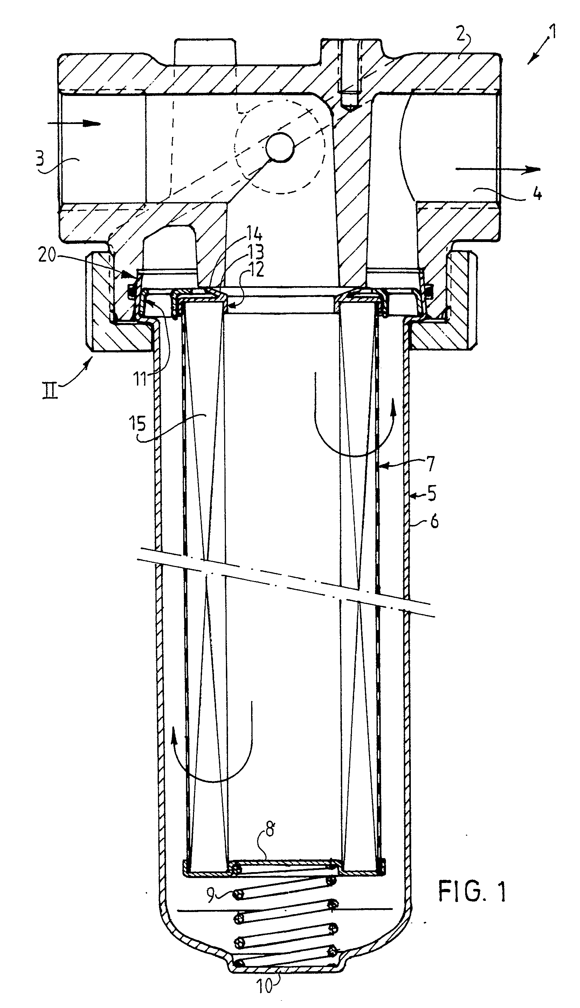

The filter device 1 in Fig. 1 comprises a filter housing 2 with a feed channel 3 for medium to be filtered and a discharge channel 4 for filtered medium. The actual filtering takes place in a filter cartridge 5 which is connected to the filter housing in a manner to be described hereinafter. Filter cartridge 5 comprises a pressure resistant outer casing 6 in which is accommodated a tubular filter element 7. At its lower end filter element 7 is closed with an end plate 8 and at its upper end element 7 is provided with an end ring 12 arranged on the top end of the filtering material 15, which ring, using a lip 13 forming one whole with it, lies close fitting against a sealing edge 14 of filter housing 2.

The filter element 7 is pressed upwards in filter cartridge 5 by means of a spring 9 arranged between end plate 8 and the bottom 10 of outer casing 6. In the unattached position filter element 7 is confined in the filter cartridge 5, while in the shown fitted position the sealing lip 13 of the end ring is then pressed by the action of spring 9 tightly against the sealing edge 14.

Because filter element 7 is accommodated resiliently in filter cartridge 5 in this manner, a so-called by-pass action is obtained. The greater the extent to which the filter material 15 is contaminated, the greater the flow resistance becomes. The difference in pressure caused by this flow resistance brings about a resulting force that is directed downwards on filter element 7, as seen in Fig. 1. As soon as this resulting force exceeds the force of spring 9 the entire filter element is pressed downwards and medium to be filtered can pass along sealing lip 13, which protrudes into the flow direction for this purpose. Although naturally the filtering action diminishes in this way, bursting of the filter element owing to the resulting pressure difference and all the undesired consequences thereof are prevented.

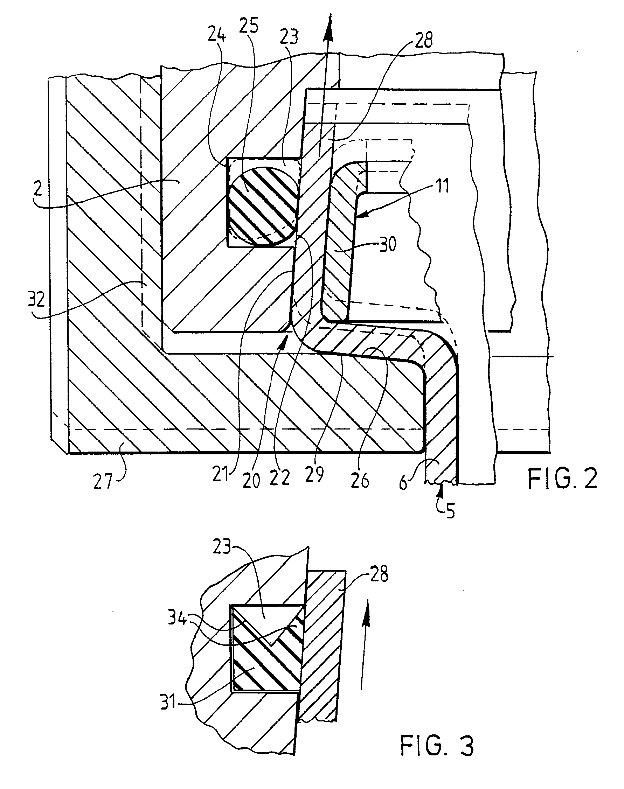

The manner in which the filter cartridge 5 is coupled to filter housing 2 will now be described in detail with reference to Fig. 2.

According to the invention the coupling device with which the filter cartridge is releasably connected to the filter housing comprises a mounting 20 with an interior, outwardly diverging conical wall 21 and a sealing ring 25 located in a groove 23 in the wall. The co-operating coupling means on filter cartridge 5 comprise an outwardly converging conical end wall 22 fitting into conical mounting 20. Also present are tensioning means with which the conical end wall 22 is held under tension in the conical mounting 20. These tensioning means comprise in this embodiment a screw coupling nut 27 which can be screwed around mounting 20 onto housing 2 using a screw thread 32 shown in schematic form.

As will be found in the Figures the conical end wall 22 is formed by the end edge 28 of outer casing 6. This end edge 28 has a greater nominal diameter than the remaining portion of the outer casing 6 so that formed between end edge 28 and this remaining portion is a transverse connecting wall part 33 which forms a tensioning surface 26 on its underside onto which grips a tensioning edge 29 of the screwed coupling nut 27.

When filter cartridge 5 is fitted its conical end edge 28 is pressed with the coupling nut 27 into the conical mounting 20. This movement is shown schematically in Fig. 2, in which filter cartridge 5 and coupling nut 27 are moved from the position drawn in full lines into the position drawn with dashed lines.

In accordance with a preferred embodiment of the invention the groove 23 has a cylindrical bottom wall 24 so that, as seen in Fig. 2, the cross section of groove 23 has side surfaces converging in downward direction. When the filter cartridge is fitted the O-ring 25 is shifted upwards from the position drawn in full lines into the position drawn with dotted lines. The medium pressure will travel along the upper edge of end edge 28 into groove 23 above O-ring 25. Prevailing on the underside of the O-ring is atmospheric pressure, so that as a consequence of the difference in pressure the O-ring in groove 23 is pressed downwards. Since the groove converges in this direction a very good contact of the sealing ring 25 against the conical wall 29 is ensured.

If for whatever reason the end edge 28 does not lie along its whole periphery against the conical wall 21 of mounting 20 the end edge 28 will, as a result of the medium pressure acting on the inside on this end edge 28, be pressed outwards so that the sealing action of sealing ring 25 is reinforced.

Because end edge 28 is supported by the conical wall 21 both above and below groove 23 no significant deforming of this edge will occur, even at very high pressures.

An important aspect of the filter device according to the invention is that the medium pressure acts in a direction in which the contact force in the sealing surfaces is increased.

Although the embodiment shown is strongly to be recommended, the invention is not limited to this embodiment. It is not essential that the conical end wall of the filter cartridge is formed by an end edge of the outer casing or lies at a greater diameter than the diameter of the remaining portion of the outer casing of the filter cartridge such that the transverse tensioning surface 26 is thereby formed.

Although an O-ring is advantageous with respect to the described movement potentiality under influence of the medium pressure, for strengthening of the sealing, neither is the invention limited thereto. As Fig. 3 shows a per se known sealing ring 31 with two sealing lips 34 protruding on either side can also be used instead of an O-ring 25.

Still clearly to be seen in Fig. 2 is that the contact plate 11 rests against the inside of the transverse connecting wall part 33 and the downwardly bending edge 30 thereof is clamped as a result of a wedging action between the conical end wall 28. This embodiment enables favourable manufacture of the filter cartridge from an economic point of view.

The coupling device according to the invention can also be employed for coupling of other parts of a device in which medium under pressure circulates.

## Claims

1. Filter device comprising a filter housing with feed and discharge channels for the medium to be filtered and a disposable filter cartridge releasably connected to said filter housing by a coupling device, in which said filter cartridge comprises a filter element accommodated in a pressure resistant outer casing and is provided with coupling means co-operating with said coupling device, characterized in that said coupling device comprises a mounting with an interior, outwardly diverging conical wall and a sealing ring located in a groove in said wall, and tensioning means, that said coupling means comprise an outwardly converging conical end wall fitting into said conical mounting and a tensioning surface, in which said tensioning means can grip on said tensioning surface to hold said conical end wall in gripping contact in the mounting.

2. Filter device as claimed in claim 1, characterized in that the groove has a cylindrical bottom wall and the sealing ring is an O-ring.

3. Filter device as claimed in claim 1 or 2, characterized in that the conical end wall is formed by an end edge of the outer casing.

4. Filter device as claimed in claim 3, characterized in that the end wall has a greater nominal diameter than the remaining portion of the outer casing and that the tensioning surface is formed by a transverse connecting wall part between said end wall and said remaining portion, in which the tensioning means comprise a screw coupling nut that can be screwed on the mounting onto the housing.

5. Filter device as claimed in any of the foregoing claims, characterized in that the filter element is a tubular filter element that is closed at its end facing away from the end wall and which is pressed by a spring arranged between this end and a bottom wall of the outer casing against a contact plate of the filter cartridge arranged close to said end wall.

6. Filter device as claimed in claims 4 and 5, characterized in that the contact plate rests against the inside of the transverse connecting wall part and is clamped firmly as a result of a wedging action between the conical end wall.

7. Filter cartridge for use in a filter device as claimed in any of the foregoing claims, comprising a filter element accommodated in a pressure resistant outer casing and coupling means intended for co-operation with a coupling device of said filter device, characterized in that said coupling means comprise an outwardly converging conical end wall and a tensioning surface.

8. Filter cartridge as claimed in claim 7, characterized in that the conical end wall is formed by an end edge of the outer casing.

9. Filter cartridge as claimed in claim 8, characterized in that the end wall has a greater nominal diameter than the remaining portion of the outer casing and the tensioning surface is formed by a transverse connecting wall part between said end wall and said remaining portion.

10. Filter cartridge as claimed in claims 7-9, characterized in that the filter element is a tubular filter element that is closed at its end facing away from the end wall and which is pressed by a spring arranged between this end and a bottom wall of the outer casing against a contact plate of said filter cartridge arranged close to said end wall.

11. Filter cartridge as claimed in claims 9 and 10, characterized in that the contact plate rests against the inside of the transverse connecting wall part and is clamped firmly as a result of a wedging action between the conical end wall.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | FR-A-2 381 551 (ULTRAFILTER GmbH) * Page 1, lines 15-31; page 3, lines 15-37; page 4, lines 1-12 * | 1,3,4,7 ,8,9 | B 01 D 27/08 B 01 D 29/06 |
| A | DE-C-3 515 365 (SCHUMACHER'SCHE FABRIK GmbH & CO. KG) * Column 3, lines 45-68; column 4, lines 1-44 * | 1,2,3,7 ,8 | |
| A | US-A-2 683 536 (W. KASTEN) * Column 2, lines 3-37 * | 1,2,5, 10 | |

TECHNICAL FIELDS
SEARCHED (Int. Cl.4)

B 01 D

The present search report has been drawn up for all claims

| Place of search | Date of completion of the search | Examiner |
|---|---|---|
| THE HAGUE | 18-01-1989 | KERRES P.M.G. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)